(19) Europäisches Patentamt
European Patent Office
Office européen des brevets

(11) **EP 4 488 988 A1**

(12) **EUROPEAN PATENT APPLICATION**

(43) Date of publication:
**08.01.2025 Bulletin 2025/02**

(21) Application number: **24186043.6**

(22) Date of filing: **02.07.2024**

(51) International Patent Classification (IPC):
**G09G 3/32** *(2016.01)*

(52) Cooperative Patent Classification (CPC):
**G09G 3/32;** G09G 2320/0693; G09G 2340/06

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.07.2023 PCT/EP2023/068222**

(71) Applicant: **Deepsky Corporation Limited
Hong Kong (HK)**

(72) Inventors:
• **COLLOT, Laurent**
  **Hong Kong (HK)**
• **ABDO, Jules**
  **ESPALY-SAINT-MARCEL (FR)**
• **DOUBLET, Antoine**
  **Hong Kong (HK)**

(74) Representative: **Cabinet Nony
11 rue Saint-Georges
75009 Paris (FR)**

(54) **METHOD AND SYSTEM FOR DETERMINING COLOR COORDINATES OF LIGHT EMITTERS OF A MATRIX DISPLAY**

(57) A method for determining color coordinates (XYZ) of light emitted by each emitter (R,G,B) of a matrix display (M), using already available information about color coordinates (XYZ) for similar light emitters with similar color characteristics other than those present in the matrix display, the method comprising: Acquiring at least two intensity images of each emitter of the matrix with different filtering, at least one of said intensity images being acquired with filtering by at least one of said acquisition filters, determining for each emitter of the matrix estimated color coordinates of said emitter based on said already available information and said intensity images.

Fig. 1

EP 4 488 988 A1

13 — Acquisition of images of intensity without acquisition filters

14 — Acquisition of images of intensity through acquisition filters

15 — Generation of normalized luminance energy vectors

16 — Determination of estimated color coordinates

Fig. 6

## Description

The present invention relates to matrix displays such as the ones found in large display panels used for displaying information outdoors.

## Prior art

Matrix displays generally comprise thousands of pixels made of red, blue and green light emitters such as LEDs, that are connected to one or more electronic drivers. Such displays can "fool" the eye to reproduce a digital image content that will accurately correspond to the captured digital content. The accuracy to reproduce the content colors is key to the perceived visual quality of the display.

Finely controlling the RGB color mix is essential to ensure a human eye cannot notice a difference between the original scene and the reproduced digital content. Observers metamerism may add to the complexity of mixing RGB components.

Matrix displays include active and passive displays.

A passive display matrix corresponds to a display in which each of the pixels maintains its current state until being addressed by the external drive circuitry. In a passive display, the circuitry drives the transition between the states of the pixels whereas in active matrix displays, each pixel is individually addressed by a switching device that actively maintains the pixel state while other pixels are being addressed.

An example of a passive matrix display driver is given in US 11361707.

The LEDs are generally powered with pulsed current of constant intensity (Constant Current Pulse Width Modulation) or as described in US 11361707 with a combination of pulses of variable intensity.

Light emitters such as LEDs have spectral characteristics that vary with current, temperature, and age, and two light emitters having the same manufacturing reference may exhibit, due to manufacturing tolerances, slightly different spectral characteristics.

These spectral differences may generate in some conditions, such as the display of a solid color, local variations of color easily discernible by the human eye, thus negatively affecting the quality of the display.

In order to optimally calibrate a LED display, because of the significant dispersion of the LED characteristics across a display, it is paramount to accurately determine the spectrum of each individual LED in order to predict the visual effect on the visual system of an observer. While such a measurement is possible, by using a scanning spectrometer, an imaging spectrometer or an hyperspectral camera, such instruments are usually costly or do not offer enough performance. The optical dynamic range required for a state of the art display with a 1000000 : 1 dynamic range for example is not easy to achieve.

There is thus a need for calibrating the matrix display by measuring individually each light emitter of the display to adapt the control signals sent to this light emitter to obtain the desired overall restitution of colors.

As explained above, conventional display calibration techniques utilizing for example spectroradiometers may prove prohibitively expensive and time consuming when applied to a matrix display having a very large number of pixels.

To solve this problem, US8246408 proposes a method for calibration of such a display. The method comprises measuring simultaneously for a plurality of light emitters of the display the normalized power spectral density function (NPSD) with a plurality of spectrometers mounted on a movable head. The panel of the display is then imaged to measure the relative luminance between each LED for each color, and a standard luminance meter is used to determine the average absolute luminance for the overall display. Calibration data is computed based on the measured chromaticity and luminance for each light emitter.

Such a method still involves for the calibration of any new matrix display the use of a plurality of spectrometers and requires a movable measurement head and thus remains relatively complex and time consuming.

US6222631 discloses a relatively complex two-dimensional spectral sensor having a plurality of band pass filters and associated lenses to form a plurality of images of a sample on an imaging device, allowing to measure spectral characteristics of the sample.

US5432609 and US20140300753A1 define what those known in the art would describe as the traditional solution for conducting 2D color measurements. In the described methodology, independent (or grouped in a typical Bayer arrangement) RGB filters are at a first order estimated as having a spectral transmission similar enough to the spectral response of the human vision system (in a simple model of the human vision system), where each of the 3 types of cones responds to different frequency ranges called the Short, Medium and Long ranges (LMS model).

The measured energy filtered through the RGB filters is considered close enough to be assimilated as the XYZ values (the absolute CIE1931 color space), provided a calibration of the measurement apparatus is performed.

Given a certain typology of emitters, the traditional methodology of US5432609 fails to accurately measure slight dominant wavelength deviations between similar light spectrums. To be more specific, as the transmission of the RGB filters in certain areas of interest is flat, the energy measured by the camera through those RGB filters will be minimally to not affected by slight shifts in the light spectrum.

Considering the typical sensitivity of a color camera, the minimum dominant wavelength shift that can be detected through this methodology is larger than 0.6nm around a Green sRGB primary or even 1.2nm around a Red sRGB primary, or a CIE2000 distance of at least +/-0.003, which is similar to the advertised performance of traditional 2D colorimeters.

US20140300753A1 and US2021215536A1 describe comparable methodology to calibrate a standard color camera to use it as a 2D colorimeter. The correspondence matrix between the RGB values measured by the color camera and the XYZ value is aimed at improving the measurement accuracy by calibrating the color camera across a larger set of reference points (simultaneously measured by a spectroradiometer and the color camera).

## Summary of the invention

There remains a need for improving calibration methods and systems to calibrate in a precise, fast and efficient manner a matrix display having many light emitters.

Exemplary embodiments of the invention relate to a method for determining color coordinates of light emitted by each emitter of a matrix display, using already available information, for example about color coordinates, for similar light emitters with similar color characteristics other than those present in the matrix display, the method comprising:

a) Acquiring at least two intensity images of each emitter of the matrix with different filtering, at least one of said intensity images being acquired with filtering by at least one acquisition filters,

b) determining for each emitter of the matrix estimated color coordinates of said emitter based on said already available information and said intensity images.

The at least one acquisition filter preferably has an attenuation that changes by more than 10% when the wavelength changes by 25nm around a central wavelength of the light emitted by the light emitter, for example changes by more than 20%, or even 25% or 30%.

"Similar light emitter with similar color characteristics" encompass light emitters of same manufacturing reference or of a manufacturing reference referred to as equivalent by manufacturers.

The already available information may comprise luminance energies of said similar light emitters filtered by corresponding acquisition filters; in a variant, the luminance energies are computed based on the knowledge of transmission properties of said acquisition filters. The already available information may also be a spectral model of the emitter.

The invention does not require to move a measurement head along the pixels of the matrix display, as the image acquisition apparatus may image, while being static, many light emitters.

The invention takes advantage of an *a priori* knowledge of the type of emitters, and the already available information may comprise a reference database of such emitters.

The reference database may contain information to predict the color of the emitters of the display to be calibrated when varying emitter current and modulation width, for example.

The method may thus comprise using the reference database storing for a plurality of light emitters color coordinates of said emitters and reference normalized luminance energy vectors corresponding to the light of said emitters filtered by one or more corresponding acquisition filters.

In the present invention, the spectral response of the acquisition filters acts as an encoding function for the spectra of the emitters and allows an accurate determination of the scalar product of the actual spectra of the emitters with the conventional color functions of the chosen color space, from simple transmission measurements. The invention is applicable to the color calibration of narrow pixel pitch displays. In the measurement method of the present invention, different acquisition filters are selected, not for their ability to reproduce the human eye cone spectral sensitivity, but for their spectral transmission's ability to act as a coding function. Preferably, the acquisition filters have sharp transmission slope near the wavelength of interest. The brightness effectively measured by the CCD or CMOS camera is thus very affected by slight changes of dominant wavelength of the emitter after filtering by the acquisition filter.

In exemplary embodiments, the color accuracy of the invention is better than +/-0.0015 in the CIE2000.

The determining at b) may comprise decoding the transfer function by computing moments of the emitter spectrum and calculating the color coordinates of the emitter such as XYZ values. The energy measured by the monochrome camera through the acquisition filters is not directly related to the XYZ values, in opposition to prior art approaches where even a simple linear calibration from a few reference points can approximate the XYZ values.

The invention does not require expensive spectrometers or cameras, can accommodate a wide dynamic range, and is capable of relative accuracy for example in the $10^{-4}$ in the XYZ color space for instance, comparable to high-end spectroradiometers.

In exemplary embodiments, the emitters being LEDs, the color space coordinates, for instance in linear CIE1931 XYZ, are estimated solely from a generic LED spectral model and the measurements of the absorbance of the light emitted by said emitters through said acquisition filters.

This is different from the state of the art cited above, which relies on analysis through filters that have a spectral response that mimics the human eye.

The method may comprise :

- computing based on said intensity images obtained at a) a corresponding normalized luminance energy vector for each emitter of the matrix,
- determining for each emitter of the matrix estimated color coordinates of said emitter using an interpolation technique based on the reference color coordinates and normalized luminance energy vectors or using a neural network trained with the reference database to estimate color coordinates of an emitter based on the normalized luminance energy vector.

Once the reference database has been generated, the method may only require for successively calibrating two different displays to acquire multiple images of these displays with the image acquisition apparatus, with for example only some changes of the filters upstream of the image acquisition apparatus.

Such changes may be performed easily by rotating a movable carriage such as a wheel on which the filters are mounted..

The color coordinates stored in the reference database may be computed after measuring the emission spectrum of the light emitters with a spectroradiometer. The normalized luminance energy of the light emitters of the reference database may be computed from a measured emission spectrum of said light emitters based on the response curve of the corresponding acquisition filter.

The method may be reiterated for different respective powering currents of said emitters.

The "different filtering" may include the absence of color filtering for one of the intensity images, or the use of two respective filters, or the use of two different transmission slopes of a same filter.

For example, one filter may have a slope from opaque to transparent for one color, for example blue, and another slope from transparent to opaque aligned with the green color. Hence one filter may be used twice during the calibration process for two different colors.

The method may comprise acquiring at least one intensity image without an acquisition filter through at least one neutral density filter.

The method may thus comprise the acquisition at a) of at least one filtered intensity image of each emitter of the matrix filtered by at least one of said acquisition filters and of at least one intensity image without acquisition filter, or with a different acquisition filter. In exemplary embodiments, the method comprises the acquisition at a) of at least two intensity images of each emitter of the matrix filtered by at least two different acquisition filters having respective positive and negative slopes at the dominant wavelength of each of the emitters of a same color (for example green, red or blue). The absorption curves of said at least two acquisition filters at the dominant wavelength of said emitters is preferably linear around said dominant wavelength in an interval of +/- 10nm around said dominant wavelength, with a linearity better than 10%, preferably better than 5%, more preferably better than 1%. In other words, if $A_{approx}(\lambda)$ is the best linear approximation of the absorbance $A(\lambda)$ of the filter in an interval $[\lambda_1,\lambda_2]$ around dominant wavelength $\lambda_0=(\lambda_1+\lambda_2)/2$ of the emitter, this amounts to $\max_{[\lambda1,\lambda2]}(|A_{approx}(\lambda)-A(\lambda)|/A(\lambda))<0,10$, and preferably $\max_{[\lambda1,\lambda2]}(|A_{approx}(\lambda)-A(\lambda)|/A(\lambda))<0,05$, and more preferably $\max_{[\lambda1,\lambda2]}(|A_{approx}(\lambda)-A(\lambda)|/A(\lambda))<0,01$.

Preferably, the interval $[\lambda_1,\lambda_2]$ is 20nm wide.

The method may comprise the acquisition at a) of at least one filtered intensity image of each emitter of the matrix filtered by at least one transmission slope and of at least one filtered intensity image of each emitter of the matrix filtered by at least a different transmission slope. The at least two acquisition filters may have response curves of opposite slopes.

The at least one acquisition filter preferably has a response curve of slope of at least 0.05 $nm^{-1}$ at a central wavelength of the light emitted by the light emitter, preferably of the order of 0.1 $nm^{-1}$.

The normalized luminance energy in the reference database may be computed from a measured emission spectrum based on the response curve of said acquisition filter.

The color coordinates stored in the reference database may be computed after measuring the emission spectrum of the light emitters with a spectroradiometer. The normalized luminance energy may be computed knowing the transmission curves of the filters and the emission spectrum.

The acquisition filters may be transmission filters.

Preferably, the method comprises repeating steps a) to b) for different respective powering currents of said emitters.

Calibration system

Exemplary embodiments of the invention also relate to a calibration system for determining color coordinates of light emitted by each emitter of a matrix display, comprising:

- A memory storing available information about color coordinates measured for light emitters other than those present in the matrix,
- an image acquisition apparatus,
- a selectable set of acquisition filters,
- a processor for controlling the image acquisition apparatus and selecting the acquisition filters to :

    ○ acquire at least one filtered intensity image of each emitter of the matrix filtered by at least one selected acquisition filters with the image acquisition apparatus, the memory preferably storing luminance energies of said other light emitters filtered by said acquisition filters,
    ○ compute for each emitter of the matrix estimated color coordinates of said emitter based on said available information stored in the memory and said acquired intensity images.

Light emitters

The light emitters may be any type of LEDs (including organic LEDs).

The LEDs may be of primary colors, such as red, blue and green colors.

The LEDs can be of various types, such as top-emitter LEDs, Flip Chip LEDs or another types. It can be encapsulated in a SMD package or a different type of electronic package, as well as directly mounted on the screen surface (Chip on Board).

The LEDs can comprise a blue or violet LED used to pump a phosphor.

The light emitters may comprise white emitters and/or cyan and amber emitters.

Matrix display

The matrix display may comprise at least 384 pixels, for example at least 16 columns and at least 8 lines.

The matrix display may comprise assembled unitary elements (also called "tiles" or "panels") each formed by a smaller matrix arrangement, the matrix display having for example between 384 and 28800 pixels, with for example between 16 and 160 columns and between 8 and 180 lines.

Image acquisition apparatus

The image acquisition apparatus preferably comprises a 2D sensitive sensor such as a CCD or CMOS imaging sensor, with a spectral sensitivity covering the desired range for the calibration.

The sensor may be a monochromatic or color camera.

The camera shutter electronics may be connected to the control electronics of the matrix display to ensure stable synchronization between the camera shutter and the temporal refresh of the matrix.

The method according to the invention can apply both to active and passive matrix displays.

Passive matrix LED screens are scanned: only one row of LED is turned on at one time by the line driver. The column drivers modulate the brightness of the LED in the selected row. Then the row and columns drivers synchronously switch to control the next row of LEDs.

The camera is preferably calibrated by carrying out a dark field and a white field measurement to improve the accuracy of its measurements. The calibration of the camera may also aim to improve its linearity.

Preferably, more than one pixel of the sensor is allocated to one pixel of the matrix display.

The camera resolution and focus are selected to ensure a good discrimination of every light emitter to be measured.

To optimize the dynamic range of the sensor it is usually better to spread the light of one emitter on several pixels of the camera , for example using a slight defocus to cover about $4 \times 4$ pixels per light emitter.

Another possible embodiment is to use a diffractive optic element in front of the camera to spread the Airy disk.

For example, to calibrate a matrix display of at least $M \times N$ pixels, a resolution of at least $5M \times 5N$ of the sensor is preferred.

The resolution of the camera may exceed 2K pixels.

Acquisition filters

The acquisition filters are selected to characterize the light emitters around their dominant wavelength.

The filters act as a coding function, converting wavelength into intensity measurements. By combining several such filters, preferably with opposite slopes, and provided an approximate spectrum of each of the emitters is known as said available information, it is possible to derive the color coordinates of the emitter in any color space suitable for human vision. Said available information may be used as initial values in an iterative algorithm for solving an equation that provides the actual color coordinates based on the measured intensities and an approximation of the absorption curves of the filters.

The acquisition filters are preferably transmission filters, for example simple color glass transmission filters. Absorptive glass filters are relatively cheap and can be selected to exhibit relatively sharp variations in transmission across the linewidth of the emitter under test.

The acquisition filters can also be dichroic filters, or specially engineered interference filters.

All acquisition filters may be mounted on a movable carriage such as a wheel that is driven to change the filter placed in front of the acquisition apparatus.

Preferably, there are at least two acquisition filters for each primary color. The first one may be a filter having a positive transmission slope from low wavelengths to high wavelengths. The second one may be a filter having a negative transmission slope from low wavelengths to high wavelengths. Using more filters with different slopes tend to increase the accuracy of the measurements.

In other words, for each color primaries, the filter set preferably comprise at least two filters with opposing slopes transmission characteristics versus wavelength to provide good rejection of DC biases in the intensity measurements.

Preferably, the transmission of the acquisition filter varies sharply across the wavelength emitted by the emitter under test, meaning that for that filter to contribute to the measurement the variation of the attenuation across the typical linewidth of the emitters should be significant. For typical emitters used in video displays the half linewidth is of the order of 25nm, and thus to specify the slope of the filters, it is preferable that their attenuation changes by more than 10 percents when the wavelength changes by 25nm.

Each acquisition filter preferably exhibits a relatively steep response slope around the central emitter wavelength of the associated light emitter. Each acquisition filter may have a response curve of slope of at least $0.05$ nm$^{-1}$ at a central wavelength of the light emitted by the light emitter, for example a slope of about $0.1$ nm$^{-1}$, less steep slope improving linearity he central wavelengths are chosen to match standard color space such as Rec2020 with wavelength for example about 470nm for blue color, about 532 nm for green color and about 635 nm for red color.

The transmission versus wavelength of the acquisition filter is preferably as linear a function as possible across the transition to increase the accuracy of the method. Preferably, the transmission versus wavelength differs from a linear approximation by less than 10%, better 5%, for an interval of +/- 10nm around the dominant wavelength of the emitter.

In order to best reject non-linearities in the responses of the filters, multiple filters with dissimilar transmissions are preferably used. Complementary filter sets presenting positive and negative curvatures are preferred.

The method may comprise computing transmission responses of the acquisition filters as power series.

The method may comprise developing as a power of $\lambda$ the transmission $F(\lambda)$ of an acquisition filter k around the dominant wavelength $\lambda_0$ of the emitter:

$$F_k(\lambda, \lambda_0) = \sum_i F_k^i(\lambda_0) \cdot (\lambda - \lambda_0)^i$$

Where the measured intensity $T_k$ can be developed as:

$$T_k = \sum_i F_k^i(\lambda_0) \cdot \int_{\lambda_{min}}^{\lambda_{max}} d\lambda \cdot I_{LED}(\lambda) \cdot (\lambda - \lambda_0)^i$$

With $I(\lambda)_{LED}$ the actual spectral irradiance of the emitter.

The method may comprise computing the moments of $I_{LED}$ as

$$\mathcal{M}^i = \int_{\lambda_{min}}^{\lambda_{max}} d\lambda \cdot I_{LED}(\lambda) \cdot (\lambda - \lambda_0)^i$$

so that the measured intensities $T_k$ correspond to the product of a matrix with a vector M of those moments M'

$$\left(T_k\right) = \begin{bmatrix} F_1^0 & \cdots & F_1^i \\ & \ddots & \\ & & F_k^i \end{bmatrix} \cdot \mathcal{M}$$

The method may comprise computing the coefficients of this matrix $[F_i]$ and the moments M, knowing the vector of measured intensities $T_k$

The available information may provide an irradiance model $I_{Model}(\lambda)$ that serves to determine a best set of fitted parameters that lead to the moments M' estimated from the measurements.

$$\mathcal{M}^i \equiv \int_{\lambda_{min}}^{\lambda_{max}} d\lambda \cdot \mathcal{I}_{Model}(\lambda) \cdot (\lambda - \lambda_0)^i$$

The dominant wavelength $\lambda_0$ of the actual emitter may be computed in an iterative manner solving $M^1 = 0$.

The method may comprise determining the X, Y, Z coordinates of the emitter for the chosen color space from the values of the moments M'.

<u>Intensity image</u>

The intensity image is an image of the light emitters of the display.

As mentioned above, the image of a given light emitter of the display may extend over a set of the detecting pixels of the image acquisition apparatus (for example 4x4 pixels). In such case, the sum of intensity values for the set of detecting pixels may be taken as the intensity value for the light emitter.

The filtered intensity image of an emitter is the image of the emitter filtered by a corresponding acquisition filter.

The method may comprise acquiring for each emitter of the matrix at least two intensity images filtered by at least two respective different acquisition filters and computing at least two corresponding normalized luminance energies, which form components of a vector for this light emitter, as explained in more details below. The at least two acquisition filters preferably have response curves of opposite slopes.

For example, at least two, better at least three, even better at least four, images of the red light emitters of the matrix display may be acquired through respective acquisition filters associated to the red color. The vector for each light emitter of red color may thus have a dimension ranging from 2 to 4, preferably at least 3, more preferably 4.

For example, at least two, better at least three, images of the green light emitters of the matrix display may be acquired through respective acquisition filters associated to the green color. The vector for each light emitter of green color may thus have a dimension ranging from 2 to 3, preferably 3.

For example, at least two, better at least three, images of the blue light emitters of the matrix display may be acquired through respective acquisition filters associated to the blue color. The vector for each light emitter of blue color may thus have a dimension ranging from 2 to 3, preferably 3.

The method may comprise acquiring at least one intensity image without an acquisition filter. This intensity image may be used for normalizing the luminance energy.

One filter could be used for its slope in the wavelength area of one color, and another suitable slope of the same filter may be used in a different wavelength area for another color. In such way, the total number of color filters mounted on the apparatus may be reduced without compromising the performance of the measurement.

In the case that the brightness range of the matrix display is wider than the dynamics of the imaging sensor, to prevent the imaging sensor from saturating, one neutral density filter may be added in front of imaging sensor.

<u>Driver</u>

The driver may be made in accordance with US 11361707, which is hereby incorporated by reference.

**Brief description of the drawings**

Fig.1 shows a calibration system in accordance with exemplary embodiments of the invention,

Fig.2 is a schematic and partial view of detail II of Fig.1,

Fig 3 shows the response curve T (transmittance) of an example of acquisition filter together with the emission spectra of R, G and B emitters,

Fig.4 is a view analogous to Fig.3 with another acquisition filter,

Fig.5 is a bloc diagram illustrating an example of reference database generation, and

Fig.6 is a bloc diagram illustrating an example of determination of estimated color coordinates,

Fig. 7 presents an example of a computed best fit applied to the transmission of a GS16 filter between 500 and 550nm,

Fig. 8 shows a spectral irradiance plot for a InGaN in green against the fitted LED model,

Fig.9 shows GS16, BS21 & BS12 filter transmissions and their respective power series approximations to the second and third order,

Fig.10 illustrates the choice of two absorption acquisition filters with respect to a green emitter.

**Detailed description**

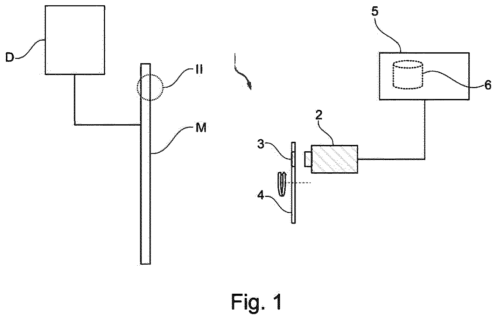

Fig. 1 shows an example of calibration system 1 in accordance with the invention.

The system 1 is used for calibration of a matrix display M connected to a driver D.

The matrix display M comprises arrays of light emitters emitting in respective various colors.

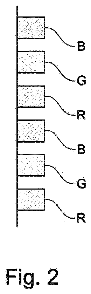

Each pixel of the matrix display M may comprise a triplet of R, G and B emitters as shown in Fig.2, emitting respectively red, green and blue light color.

The calibration system 1 aims at determining color coordinates of each light emitter of the matrix display, for at least one powering intensity of the light emitters.

The calibration system 1 comprises an image acquisition apparatus 2 that may comprise an imaging sensor such as a CCD or CMOS imaging sensor, for example a monochrome CCD camera.

A set of acquisition filters 3 carried by a movable carriage such as a wheel 4 is present in front of an objective of the camera 2 to filter the incoming light.

The wheel 4 may carry :

-    acquisition filters for filtering red light,
-    acquisition filters for filtering green light,
-    acquisition filters for filtering blue light,
-    neutral density (ND) filters.

For example, the wheel carry four acquisition filters for filtering red light that may be the ones of commercial references BG38 (Schott), CM500 (Hoya), RG610 (Schott) and RG630 (Schott), three for filtering green light the ones that may be of commercial references OG515 (Schott), OG530 (Schott) and B460 (Hoya), and three for filtering blue light that may be the ones of commercial references BG3 (Hoya), EB390 and GG475 (Schott).

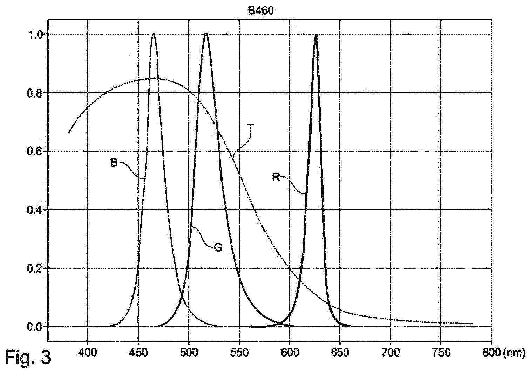

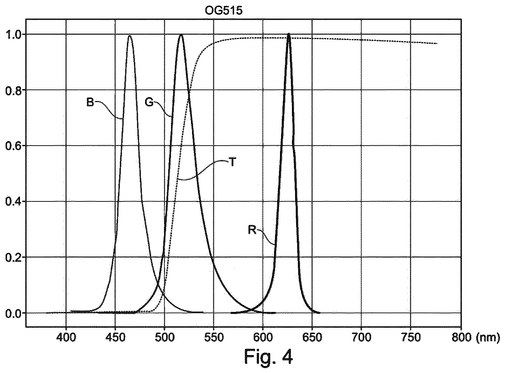

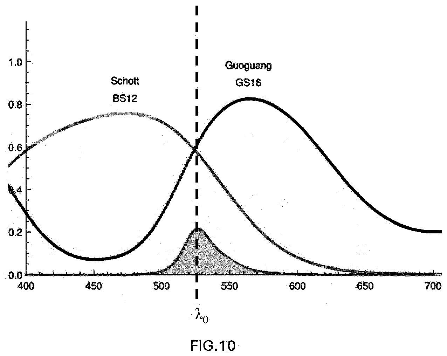

As an example, the transmittance T for examples of acquisition filters B460 (Hoya) and OG515 (Schott) for green color are given in FIG.3 and FIG.4 respectively. Fig. 10 provides another example of acquisition filters BS12 and GS16 for a green emitter.

On these figures, emission spectra of red R, green G and blue B emitters have also been shown.

Each acquisition filter exhibits a transmittance showing a relatively steep slope crossing a central wavelength of the emission spectrum of the emitter to which it is to be associated (in Figs 3 and 4 about 520nm). For each color, preferably at least one acquisition filter has a positive slope (from low wavelengths to high wavelengths) as shown in Fig. 4, and one other filter a negative slope as shown in Fig.3.

The acquisition system 1 comprises computing means 5 such as a computer or dedicated electronics circuit, that has access to an electronic memory such as a hard drive or solid state drive or server, in which a reference database 6 is stored.

The (unfiltered) luminance energy $E_{mi}$ may be defined for a sample m of manufacturing reference i by :

$$E_{mi} = \int_{400}^{800} \square\, E_{mi}(\lambda)d\lambda$$

where $E_{mi}(\lambda)$ is the luminous energy of the emitter measured without an acquisition filter.

The ends of the integrating interval may be other than 400nm and 800nm, provided they encompass the emission spectrum of the light emitter.

The normalized luminance energy $NLE_{mik}$ for light of emitter m of manufacturing reference i filtered by an acquisition filter k of transmittance Uk is given by :

$$NLEmik = \frac{\int_{400}^{800} \square\, E_{mi}(\lambda)Uk(\lambda)}{E_{mi}} d\lambda$$

The reference database 6 stores for each sample *m* of a plurality of *p* samples of a light emitter having a manufacturing reference *i*, color coordinates $X_{mi}Y_{mi}Z_{mi}$ of the emitter in a given color space (CIE 1931 XYZ for example) as measured with a spectroradiometer and the associated normalized luminance energy vector $NLE_{mi}(NLE_{mi1},...,NLE_{mik},...,NLE_{min})$, *n* being an integer that may vary according to the color of the light emitters of manufacturing reference *i* and $NLE_{mik}$ the normalized luminance energy of the sample m of emitter of reference i filtered by the filter *k* of transmittance $U_k$.

For example, for green and blue, *n*=3 and for red *n*=4. The use of more filters makes the measurement more accurate.

To measure the color coordinates $X_{mi}Y_{mi}Z_{mi}$ one may use a spectroradiometer that measures the emission spectrum and computes the color coordinates, such as Konika Minolta CS2000 for example.

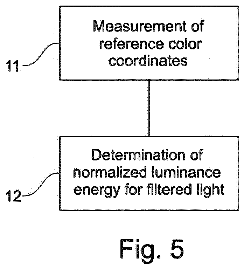

This corresponds to step 11 of the block diagram of FIG.5.

To compute the component *k* of the $NLE_{mi}$ vector, one may compute the luminance energy knowing both the emission spectrum and the transmittance Uk of the filter *k* associated to this component.

This corresponds to step 12 of FIG.5.

The component k of the NLEmi vector may also be directly measured, by acquiring for said emitter sample mi the intensity of such emitter filtered by filter k with the calibration apparatus

The reference database can also be generated by being computed from the theoretical transmission function of the filter and the theoretical spectrum of the emitters.

For a given color, between 100 and 1000 samples of light emitters may be measured, and thus the number of NLE vectors may range from 100 to 1000.

However, the database may be enriched with theoretical filters that are derived from a limited database of measured emitter spectrum but shifted to different central wavelengths. This ensures that all emitters to be calibrated are within the covered area of the reference database.

In an example, for green light emitter, one may have n=3 and the three acquisition filters OG515 (k=1), OG530 (k=2)and B460 (k=3).

The component $NLE_{i1}$ may correspond to normalized luminance energy of the green light of the emitter i filtered by filter OG515 (Schott), $NLE_{i2}$ to the normalized luminance energy of the green light of the emitter filtered by filter OG530 (Schott) , and $NLE_{i3}$ to the normalized luminance energy of the green light of the emitter filtered by filter B460 (Hoya).

The reference database 6 may thus contain the following information (for n=3):

| Manufacturing reference | Sample number | Color coordinates component X | Color coordinates component Y | Color coordinates component Z | NLE vector component 1 | NLE vector component 2 | NLE vector component 3 |
|---|---|---|---|---|---|---|---|
| i | 1 | Xi1 | Yi1 | Zi1 | $NLE_{i11}$ | $NLE_{i12}$ | $NLE_{i13}$ |
| i | 2 | Xi2 | Yi2 | Zi2 | $NLE_{i21}$ | $NLE_{i22}$ | $NLE_{i23}$ |
| ... | | | | | | | |
| i | p | Xip | Yip | Zip | $NLE_{ip1}$ | $NLE_{ip2}$ | $NLE_{ip3}$ |
| j | 1 | Xj1 | Xj1 | Zj1 | $NLE_{j11}$ | $NLE_{j12}$ | $NLE_{j13}$ |

(continued)

| Manufacturing reference | Sample number | Color coordinates component X | Color coordinates component Y | Color coordinates component Z | NLE vector component 1 | NLE vector component 2 | NLE vector component 3 |
|---|---|---|---|---|---|---|---|
| ... | | | | | | | |

The matrix display M is preferably made of light emitters of manufacturing references similar to the ones in the database 6.

The invention allows to determine estimated color coordinates of each light emitter $q$ of a given color (for example green) of the matrix display M without measuring the emission spectra using a spectroradiometer.

Instead, all light emitter of a given color of the matrix display are powered with a given intensity and a plurality of intensity images of the matrix display are taken by the camera 2 to enable to compute the NLE vector for each light emitter q of the matrix display M that is on. The image may encompass all light emitters of a given color of the matrix display M; in this case, the process may be performed simultaneously for all light emitters of the image.

An image without acquisition filter is taken to compute the luminance energy of the light emitter $q$:

$$E_q = \int_{400}^{800} \square\, E_q(\lambda) d\lambda$$

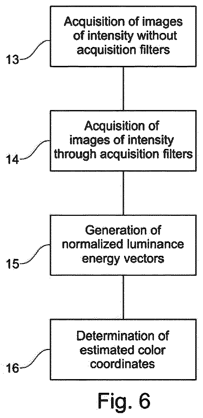

This corresponds to step 13 of FIG.6.

The step of acquisition of the intensity images with the successive acquisition filters for this color corresponds to step 14 of FIG.6.

This enables to compute the components ($NLE_{q1}$, $NLE_{q2}$, ...) of the $NLE_q$ vector for the light emitter q at step 15 of FIG.6 :

$$NLE_{qk} = \int_{400}^{800} \square\, \frac{E_q(\lambda) U_k(\lambda)}{E_q} d\lambda$$

where Uk is the transmittance of filter k.

Once the $NLE_q$ vector is known for a light emitter q of the matrix display, the reference database 6 is used to estimate the color coordinates $X_q, Y_q, Z_q$ of this light emitter at step 16 of FIG.6.

For example, a triangulation is performed using the reference database. This triangulation may be a triangulation of Delaunay. Then a bivariate barycentric interpolation may be performed to estimate the color coordinates (for example XYZ or Lab Color Space) of this light emitter. An example of bivariate barycentric interpolation is disclosed in "Barycentric Interpolation" Kai Hermann, Faculty of Informatics, Universita della Svizzera italiana, Hermann papers (2014).

Other mathematical or computational approaches may be used.

For example, a regression of the color coordinates $X_q, Y_q, Z_q$ being given, the NLE vector of a light emitter q may be computed with a fully connected multi-layer perceptron (MLP) with appropriate activation functions.

The MLP may consist of several dense layers with non-linear activation functions such as Rectified Linear Unit (ReLU), LeakyReLU or Hyperbolic Tangent (Tanh). The number of neurons in each layer is determined based on the complexity of the data and the desired level of performance.

Given the limited number of input and output dimensions, a shallow architecture with one or two hidden layers is sufficient for this task. However, deeper architectures may be used if needed.

Three neural network may be trained under supervision using the reference database 6, one for each color of the light emitters.

The input layer may have n neurons. For example, for green and blue, $n=3$ and for red $n=4$.

The output layer may have 3 neurons using an appropriate linear activation function to perform the regression task.

A possible architecture may be :

Input: 3 neurons

Hidden Layer 1: 8 neurons with ReLU activation

Hidden Layer 2: 4 neurons with Tanh activation

Output Layer: 3 neurons with linear activation

This architecture may be adapted according to the complexity and the quantity of the data stored in the reference database 6.

These steps are repeated for all light emitters of a same color of the matrix display M, and the same method is carried out for all emitters of other colors, with the corresponding acquisition filters.

The color coordinates of each emitter of the matrix display M may be thus estimated for different currents used in the powering scheme.

This enables to build a calibration database that is used by the screen controller and driver to compensate for manufacturing tolerances by adjusting the individual average currents for each light emitter of a given pixel to generate uniform color when a solid color is displayed.

For example, the screen controller and driver will adjust the average current of each LED individually to ensure an image content representing a solid green color has the same brightness across the different panels of the display matrix.

Furthermore, the screen controller and driver may adjust the brightness of complementary colors (for example red and blue) in each RGB pixel (typically formed of 3 LEDs, one red, one green, one blue), to ensure that the green color to be displayed is of the same green color across the different panels of the display matrix.

Example of determination of actual spectral irradiance of a light emitter with a spectral irradiance model of the emitter as already available information

A. Vector of moments

The light from a LED emitter transmitted through a given acquisition filter may be approximated by developing the transmission response of the acquisition filter as a power series.

A simple power series is used here as a possible embodiment, knowing that other techniques are possible, such as Legendre's polynomes.

$$T_k = \int_{\lambda_{min}}^{\lambda_{max}} F_k(\lambda) \cdot I_{LED}(\lambda) \qquad (1a)$$

where $I(\lambda)_{LED}$ is the actual spectral irradiance of the emitter, k is the index of the acquisition filter used for the measurement and $T_k$ the intensity of the emitter as measured through the acquisition filter k.

Let's develop as a power of $\lambda$ the transmission of the acquisition filter k around $\lambda_0$:

$$F_k(\lambda, \lambda_0) = \sum_i F_k^i(\lambda_0) \cdot (\lambda - \lambda_0)^i$$

Thus, the intensity $T_k$ can be developed as:

$$T_k = \sum_i F_k^i(\lambda_0) \cdot \int_{\lambda_{min}}^{\lambda_{max}} d\lambda \cdot I_{LED}(\lambda) \cdot (\lambda - \lambda_0)^i$$

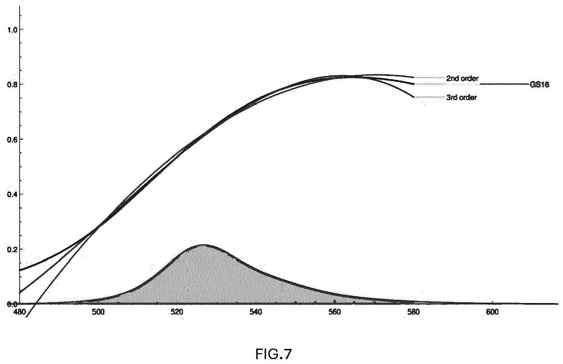

Figure 7 presents an example of a computed best fit applied to the transmission of a GS16 filter supplied by the company Nantong Guoguang Optical Glass Co., Nantong, Jiangsu Province, China between 500 and 550nm.

In practice the smooth spectral variation of such colored filter allows for an accurate power series expansion around the dominant wavelength $\lambda_0$ of the emitter.

Let's define the moments of $I_{LED}$ as

$$\mathcal{M}^i = \int_{\lambda_{min}}^{\lambda_{max}} d\lambda \cdot I_{LED}(\lambda) \cdot (\lambda - \lambda_0)^i$$

(1)

The measured intensities can be interpreted as the product of a matrix with a vector M of those moments M'

$$(T_k) = \begin{bmatrix} F_1^0 & \cdots & F_1^i \\ & \ddots & \\ & & F_k^i \end{bmatrix} \cdot \mathcal{M}$$

(2a)

$F_1$ is considered here as the special case where no acquisition filter is placed in front of the LED emitter to measure the total luminous power emitted by the LED emitter and thus provide a normalization value.

$$F_1 = \begin{pmatrix} 1 \\ 0 \\ \vdots \\ 0 \end{pmatrix}^T$$

Therefore, using equation 2a we can now solve for M, knowing the vector of measured intensities $T_K$ and the computed [F ;], as detailed further in section C below.

The method leads to a constraint on the vector of moments M from the determination of the transmitted intensities through the acquisition filter set.

B. LED model

Available information about the spectrum of the emitter under consideration, such as a spectral model or a database about spectrum of similar emitters is used so that its moments M' are equal to the measured M.

To constrain the solutions a parametric model of the spectral irradiance I(λ) of the LEDs for red, green & blue may be used so that known non-linear fitting techniques can be used to determine the best set of fitted parameters that lead to the M' estimated from the measurements.

$$\mathcal{M}^i \equiv \int_{\lambda_{min}}^{\lambda_{max}} d\lambda \cdot \mathcal{I}_{Model}(\lambda) \cdot (\lambda - \lambda_0)^i$$

For instance, from a modified Shockley-Read-Hall theory the following model can be used, which is pseudo-phenomenological.

$$\mathcal{E}(\lambda) = e^{\frac{\lambda - C_{led} + \Omega_{led} ln(S_{led})}{\Omega_{led}}}$$

(3a)

$$\mathcal{I}(\lambda) = \frac{A_{led}}{S_{led}} \cdot \mathcal{E}(\lambda) \cdot \left(1 + \mathcal{E}(\lambda)\right)^{\frac{-1 - S_{led}}{S_{led}}} \cdot (1 + S_{led})^{\frac{1 + S_{led}}{S_{led}}}$$

(3b)

$$\Omega_{center} = C_{led} - \Omega_{led} \cdot ln(S_{led})$$

(3c)

where $A_{led}$ represents, in nature, an amplitude, $C_{led}$ the dominant wavelength,

$S_{led}$ the entropy of the carriers and $\Omega$led is related to the linewidth.

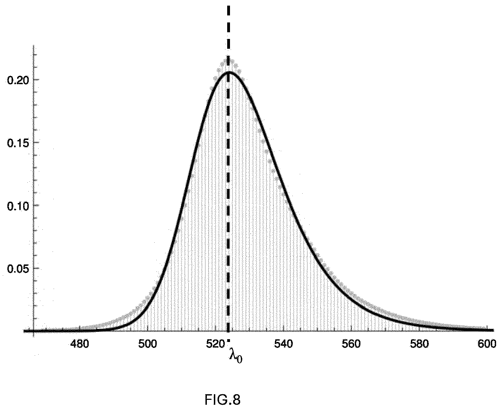

Figure 8 depicts the best non-linear fit of such a model to a typical green InGaN LED used in narrow pixel pitch LED displays.

Since the semi-phenomenological model chosen here does not capture perfectly all the physical effects, let's quantify the discrepancy between the actual LED emitter and its model when applied to the determination of X, Y & Z coordinates for the CIE 1931 color space.

$$\begin{pmatrix} L \\ M \\ S \end{pmatrix} = \int_{400}^{700} d\lambda \cdot LMS_{cie1931}(\lambda) \cdot \mathcal{I}(\lambda) \qquad (4a)$$

And then the

$$\begin{pmatrix} X \\ Y \\ Z \end{pmatrix}$$

vector representing the color as perceived by the observer in the CIE1931 trichromic theory is given by the Hunt-Pointer-Estevez relation:

$$\begin{pmatrix} X \\ Y \\ Z \end{pmatrix} = \begin{pmatrix} 1.91020 & -1.11212 & 0.20191 \\ 0.37095 & 0.62905 & 0 \\ 0 & 0 & 1.00000 \end{pmatrix} \begin{pmatrix} L \\ M \\ S \end{pmatrix} \qquad (5a)$$

If we compute the

$$\begin{pmatrix} X \\ Y \\ Z \end{pmatrix}$$

expected from the measured LED irradiance of the emitter in figure 8 and its model respectively we find:

$$\begin{pmatrix} X \\ Y \\ Z \end{pmatrix}_{from\ spectrum} = \begin{pmatrix} 0.244414 \\ 0.965544 \\ 0.0893704 \end{pmatrix}$$

versus $\begin{pmatrix} X \\ Y \\ Z \end{pmatrix}_{from\ model} = \begin{pmatrix} 0.228686 \\ 0.969995 \\ 0.0825345 \end{pmatrix}$ which is an acceptable agreement considering the limitations of the model and the illustrative nature of this example.

In an actual measurement system, a large database of similar actual emitters preferably replaces the spectral irradiance model as available information. A more refined physical model may also be used.

C. Solving

The solving for M can be obtained by many different well known methods.

For the sake of simplicity, we shall use here a simple singular value decomposition in order to compute a least square solution to equation 2a. In fact, this method can handle cases where there are more measurements than the number of parameters to solve, with the added benefit of improving accuracy.

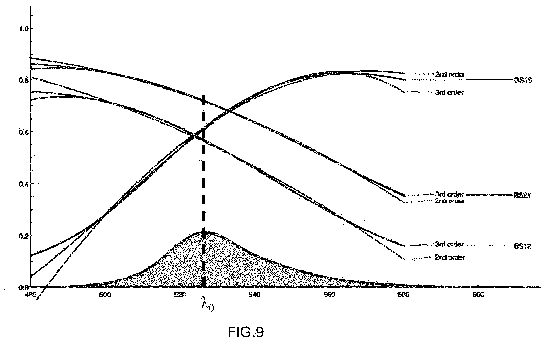

For example, the measured vector (Tk) of normalized intensities for the acquisition filter set composed of respectively none/GS16/BS12/BS11 as depicted in figure 9 is

$$\left(T_k\right) = \begin{bmatrix} 1 \\ 0.637256 \\ 0.512829 \\ 0.672874 \end{bmatrix}$$

The matrix composed of the $F_i$ coefficients computed from the power series of the respective filters around the wavelength $\lambda = 532.8$nm is

$$\left(F_k^i\right) = \begin{pmatrix} 1 & 0 & 0 & 0 \\ 0.674446 & 0.00967216 & -0.000110165 & 1.278\,014\,109\,831\,236\,8 \times 10^{-6} \\ 0.518323 & -0.00807109 & -0.0000318899 & 8.915\,151\,827\,259\,025 \times 10^{-7} \\ 0.682088 & -0.00618049 & -0.0000368125 & 4.279\,642\,091\,814\,209\,5 \times 10^{-7} \end{pmatrix}$$

The least mean square solution using the singular value decomposition method gives

$$\mathcal{M} = \begin{bmatrix} 1. \\ 0.175997 \\ 286.965 \\ 5695.89 \end{bmatrix}$$

The X, Y & Z coordinates of the emitter for the chosen color space may be derived from the values of the moments $M^i$

Equation (1) ties the moments Mi to the spectrum I($\lambda$) of the emitter. Using a non linear best fit method, an optimal emitter spectral model with respect to the metric chosen for the optimization algorithm is obtained. A suitable model can be for instance the Shockley-Read-Hall model given above. This best fit spectrum is an accurate representation of the actual emitter spectral properties. Therefore computing X, Y & Z can then be accomplished from the LMS as explained above (see equations 4a and 5a).

D. Accuracy

We can evaluate the estimated transmitted power through the filters, for the exact acquisition filter transmission and its approximation as a power series.

$$\left(F_k^i\right)\mathcal{M} = \begin{bmatrix} 1. \\ 0.637256 \\ 0.512829 \\ 0.672874 \end{bmatrix}$$

In order to calculate the expected power through the filter in the exact case and the polynomial approximation, one can compute the scalar product between the spectrum of the emitter and the response of each acquisition filter (or its power series) to the second and third order, such as for the GS16 filter for example :

$$T_{GS16} = \int_{\lambda_{min}}^{\lambda_{max}} F_{GS16}(\lambda) \cdot I_{LED}(\lambda) \qquad (6a)$$

The dominant wavelength is chosen here to be such as $M^1 = 0$ corresponding to a wavelength of $\lambda_0 = 532.795$nm for this green LED emitter.

| Filter | 2nd Order | 3rd Order | Exact |
|--------|-----------|-----------|---------|
|        |           |           |         |
| GS16   | 0.636573  | 0.637807  | 0.637256 |
| BS12   | 0.50736   | 0.513475  | 0.512829 |

The spectral response of the acquisition filters modelled as a power series can be substituted to the actual response, and equation 1a can be numerically estimated to a relative accuracy of a few $1 \times 10^{-3}$ when the third order of the power series is used.

Also, in practice it is beneficial for the stability of the results to iterate the method, in order to compute the power series expansion near the average wavelength of the emitter, i.e. for $M^1 = 0$.

So, after each iteration the best mean wavelength is determined and is substituted as the seed of the next iteration.

This exemplary semi-analytical method shows that the spectral irradiance of a quasimonochromatic LED emitter can be inferred from a set of simple intensity measurements through glass colored filters, which act as discrimination functions.

The method corrects for non-linearities in the spectral response of the filters with respect to wavelength.

This exemplary method can be applied to the color calibration of narrow pixel pitch LED displays, relying on inexpensive optical components and camera. The method is also quite swift considering that all pixels of the displays are measured concurrently.

The invention is not limited to the disclosed embodiments.

For example, dichroic transmission filters may be replaced by dichroic beam splitter cubes.

The dimension of the NLE vectors of a given color may be different, for example being four or more instead of three for the green color. To improve accuracy, it is preferable to collect a larger NLE vector for any given color, so that systematic deviation shall average out.

The acquisition filters may be mounted on a carriage other that a wheel, for example a carriage movable in translation.

The acquisition filters may be fixed on a camera sensor, with multiple camera sensors in one embodiment, one per filter. One possible embodiment is to use dichroic filters to separate the light to be characterized towards multiple camera sensors.

**Claims**

1. A method for determining color coordinates of light emitted by each emitter, preferably a LED, of a matrix display (M), using already available information, notably about color coordinates (XYZ), for similar light emitters with similar color characteristics other than those present in the matrix display, the method comprising:

    a) Acquiring, preferably with an image acquisition apparatus being a camera, at least two intensity images of each emitter of the matrix with different filtering by acquisition filters, at least one of said intensity images being acquired with filtering by at least one of said acquisition filters, the at least one acquisition filter having an attenuation that changes by more than 10% when the wavelength changes by 25nm around a central wavelength ($\lambda_0$) of the light emitted by the light emitter,
    b) determining for each emitter of the matrix estimated color coordinates of said emitter based on said already available information and said intensity images.

2. The method of claim 1, comprising the acquisition at a) of at least one filtered intensity image of each emitter of the matrix filtered by at least one of said acquisition filters and of at least one intensity image without acquisition filter.

3. The method of claim 1, comprising the acquisition at a) of at least one filtered intensity image of each emitter of the matrix filtered by at least one transmission slope and of at least one filtered intensity image of each emitter of the matrix filtered by at least a different transmission slope.

4. The method of any one of claims 1 to 3, the already available information being about color coordinates and the method comprising using a reference database (6) storing for a plurality of light emitters color coordinates (XYZ) of said emitters and reference normalized luminance energy (NLE) vectors corresponding to the light of said emitters filtered by one or more corresponding acquisition filters.

5. The method of any one of claims 1 to 4, the already available information being about color coordinates and the method comprising:

    c) computing based on said intensity images obtained at a) a corresponding normalized luminance energy vector for each emitter of the matrix,
    d) determining for each emitter of the matrix estimated color coordinates of said emitter using an interpolation technique based on the reference color coordinates and normalized luminance energy vectors or using a neural network trained with the reference database to estimate color coordinates of an emitter based on the normalized luminance energy vector.

6. The method of any one of claims 1 to 5, the at least one acquisition filter having a response curve of slope of at least $0.05$ nm$^{-1}$ at a central wavelength of the light emitted by the light emitter, preferably of the order of $0.1$ nm$^{-1}$.

7. The method of claim 4, the normalized luminance energy in the reference database being computed from a measured emission spectrum based on the response curve of said acquisition filter.

8. The method of claim 4, the color coordinates stored in the reference database being computed after measuring the emission spectrum of the light emitters with a spectroradiometer.

9. The method of any one of claims 1 to 8, comprising acquiring at least one intensity image without an acquisition filter through at least one neutral density filter.

10. The method of any one of claims 1 to 9, the acquisition filters being transmission filters, preferably colored glass filters.

11. The method of any one of claims 1 to 10, the filters having a transmission versus wavelength that differs from a linear approximation by less than 10%, better 5%, for an interval of +/-10nm around the dominant wavelength ($\lambda_0$) of the emitter.

12. The method according to any one of claims 1 to 11, comprising acquiring for each emitter of the matrix at least two intensity images filtered by at least two respective different acquisition filters.

13. The method of claim 12, the at least two acquisition filters having response curves of opposite slopes around the dominant wavelength ($\lambda_0$) of the emitter.

14. The method according to any one of claims 1 to 13, comprising repeating steps a) to b) for different respective powering currents of said emitters.

15. A calibration system for determining color coordinates of light emitted by each emitter of a matrix display (M), comprising:

    - A memory storing using available information about color coordinates measured for light emitters other than those present in the matrix,
    - an image acquisition apparatus,
    - a selectable set of acquisition filters,
    - a processor for controlling the image acquisition apparatus and selecting the acquisition filters to :

        ∘ acquire at least one filtered intensity image of each emitter of the matrix filtered by at least one selected acquisition filters (3) with the image acquisition apparatus (2), the at least one acquisition filter having an attenuation that changes by more than 10% when the wavelength changes by 25nm around a central wavelength ($\lambda_0$) of the light emitted by a light emitter of said matrix,
        ∘ compute for each emitter of the matrix estimated color coordinates of said emitter based on said available information stored in the memory and said acquired intensity images.

Fig. 1

Fig. 2

Fig. 3

Fig. 4

11 — Measurement of reference color coordinates

12 — Determination of normalized luminance energy for filtered light

## Fig. 5

Acquisition of images
of intensity without
acquisition filters

13

Acquisition of
images of intensity
through acquisition filters

14

Generation of
normalized luminance
energy vectors

15

Determination of
estimated color
coordinates

16

## Fig. 6

FIG.7

FIG.8

FIG.9

FIG.10

Europäisches
Patentamt
European
Patent Office
Office européen
des brevets

# EUROPEAN SEARCH REPORT

Application Number

EP 24 18 6043

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/215536 A1 (SCHUCK III MILLER HARRY [US] ET AL) 15 July 2021 (2021-07-15) * Par. 17, 43, 70, 74-79, 80-85. Fig. 6-7 * | 1-15 | INV. G09G3/32 |
| Y | US 2013/050504 A1 (SAFAEE-RAD REZA [CA] ET AL) 28 February 2013 (2013-02-28) * Par. 7, 16, 21, 27-31, 38-40, 42, 52, 65. * | 1-7,9-15 | |
| Y | US 2020/043201 A1 (TANAKA KAZUNORI [US] ET AL) 6 February 2020 (2020-02-06) * par. 5, 42, 52, 58, 63-66, 69, 87, 88. Fig, 5C, 6. * | 1-15 | |
| Y | US 6 222 631 B1 (TERAUCHI KOICHI [JP]) 24 April 2001 (2001-04-24) * Fig. 1-2. Col. 2, l. 1-11, 40-47, col. 2, 1- 66 - col. 3, 1. 7. * | 1-15 | |

TECHNICAL FIELDS
SEARCHED (IPC)

G09G

The present search report has been drawn up for all claims

| Place of search | Date of completion of the search | Examiner |
|---|---|---|
| Munich | 28 October 2024 | Bader, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 6043

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2024

| Patent document cited in search report | Publication date | Patent family member(s) | | Publication date |
|---|---|---|---|---|
| US 2021215536 A1 | 15-07-2021 | CN | 112437872 A | 02-03-2021 |
| | | US | 2021215536 A1 | 15-07-2021 |
| | | WO | 2020023675 A1 | 30-01-2020 |
| US 2013050504 A1 | 28-02-2013 | CN | 103765503 A | 30-04-2014 |
| | | EP | 2751799 A2 | 09-07-2014 |
| | | JP | 6352185 B2 | 04-07-2018 |
| | | JP | 6529936 B2 | 12-06-2019 |
| | | JP | 2014531612 A | 27-11-2014 |
| | | JP | 2016197249 A | 24-11-2016 |
| | | KR | 20140054326 A | 08-05-2014 |
| | | US | 2013050504 A1 | 28-02-2013 |
| | | WO | 2013033175 A2 | 07-03-2013 |
| US 2020043201 A1 | 06-02-2020 | CN | 112567736 A | 26-03-2021 |
| | | EP | 3831053 A1 | 09-06-2021 |
| | | JP | 2021532417 A | 25-11-2021 |
| | | JP | 2024061855 A | 08-05-2024 |
| | | US | 2020043201 A1 | 06-02-2020 |
| | | WO | 2020028872 A1 | 06-02-2020 |
| US 6222631 B1 | 24-04-2001 | JP | H11201819 A | 30-07-1999 |
| | | US | 6222631 B1 | 24-04-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 11361707 B
- US 8246408 B
- US 6222631 B
- US 5432609 A
- US 20140300753 A1
- US 2021215536 A1

### Non-patent literature cited in the description

- Barycentric Interpolation. **KAI HERMANN**. Hermann papers. Faculty of Informatics, Universita della Svizzera italiana, 2014